# FASCICULE DE BREVET EUROPEEN

(11) **EP 1 143 836 B1**
(45) Date de publication et mention de la délivrance du brevet: **02.02.2005**
(21) Numéro de dépôt: 99961119.7
(22) Date de dépôt: 21.12.1999
(51) Int. Cl.: A47J 27/21, A47J 31/20, H05B 3/82

(54) **FOND CHAUFFANT POUR APPAREIL ELECTROMENAGER DESTINE A CHAUFFER LES LIQUIDES**
BODENHEIZUNG FÜR HAUSHALTSGERÄT ZUM ERHITZEN VON FLÜSSIGKEITEN
HEATING BASE FOR ELECTRIC HOUSEHOLD APPLIANCE FOR HEATING LIQUIDS

(30) Priorité: 21.12.1998 FR 9816392; 24.12.1998 FR 9816594
(43) Date de publication de la demande: 17.10.2001
(73) Titulaire: SEB S.A., 69130 Ecully (FR)
(72) Inventeur: DOMINGUEZ, Augustin, F-65000 Tarbes (FR)
(74) Mandataire: Kiehl, Hubert
(86) Numéro de dépôt international: PCT/FR1999/003216
(87) Numéro de publication internationale: WO 2000/036956

(56) Documents cités:
- WO-A-97/21374
- DE-A- 19 706 523
- GB-A- 2 317 991
- GB-A- 2 322 274

## Description

La présente invention se rapporte au domaine technique général des appareils électroménagers destinés à chauffer les liquides. L'invention concerne tout particulièrement, mais non exclusivement, les cafetières électriques à piston. L'invention se rapporte plus particulièrement au système de chauffage de l'appareil et concerne un fond chauffant.

Une cafetière à piston comporte de manière connue un récipient cylindrique dans lequel est disposé un piston amovible assurant une étanchéité périphérique avec les parois du récipient. Le piston comporte une tige de manoeuvre et présente une surface comportant des moyens de filtration de la mouture de café dispersée dans l'eau. Usuellement, l'utilisateur dispose dans le récipient la quantité de mouture désirée, puis verse de l'eau préalablement chauffée. Préférablement le mélange obtenu est agité, par exemple à l'aide d'une cuillère. L'utilisateur peut alors fermer le récipient avec le piston, pour limiter les déperditions de chaleur et d'arôme. Après quelques minutes d'infusion, l'utilisateur descend le piston pour filtrer la boisson. La mouture est alors emprisonnée entre le fond du récipient et le piston, et l'utilisateur obtient une boisson filtrée.

Un inconvénient de ce type d'appareil est que la température du mélange eau chaude et mouture diminue lors de la préparation, et notamment lors de l'agitation du mélange avec une cuillère métallique. La boisson obtenue a ainsi une température avoisinant 80°C. L'utilisateur ne doit pas attendre pour consommer son café, au risque de le trouver insuffisamment chaud.

Il est connu du document DE 1 97 06 523 de réaliser un appareil pour la préparation de boisson chaudes devant être filtrées, comportant des moyens de chauffe ou de maintien au chaud électriques disposés sous un récipient cylindrique dans lequel coulisse un piston filtrant. Selon le mode de réalisation présenté, les moyens de chauffe sont associés à un dispositif thermostatique prévu pour couper les moyens de chauffe dès que l'eau bout dans le récipient. Pour préparer du café, ce document enseigne de remplir le récipient d'eau froide, d'ajouter la mouture et de mettre en marche les moyens de chauffe. Un inconvénient de ce procédé est qu'il porte à ébullition la mouture mélangée à l'eau, ce qui dégrade les arômes du café. De plus ce document n'aborde pas le problème de la conservation de la boisson au dessus d'une température donnée après sa préparation.

Un fond chauffant pour appareil électroménager destiné à chauffer des liquides, comportant une plaque métallique recouverte sur sa face inférieure d'une couche isolante sur laquelle est agencée une piste résistive chauffante, associée à des moyens de régulation, est connu du document EP 0 574 310.

Le document CA 1 202 659 divulgue une bouilloire comportant un fond chauffant comprenant un élément chauffant blindé annulaire et un thermostat bimétallique. Le thermostat est fixé sous le fond perpendiculairement à l'élément chauffant. Le but de ce thermostat est de réguler la puissance de l'élément chauffant lorsque le liquide présent dans la bouilloire a atteint sa température d'ébullition.

Le document GB 2 322 274 divulgue un fond chauffant comportant des pistes résistives ainsi que deux actionneurs thermostatiques. Le premier actionneur thermostatique est monté sur une coupelle en cuivre venant en contact avec le la base d'un puits ménagé dans le fond chauffant. Cet actionneur sert à détecter l'ébullition du liquide. Un deuxième actionneur est monté sous le fond chauffant au dessus des pistes résistives. Cet actionneur sert à détecter les chauffes à sec.

L'objet de la présente invention vise à proposer un fond chauffant pour appareil électrique destiné à chauffer les liquides, comportant des moyens de coupure des moyens de chauffe lorsque la température souhaitée a été atteinte, pour chauffer des liquides sans pour autant les porter à ébullition.

Un autre objet de la présente invention vise à proposer un fond chauffant pour appareil électrique destiné à chauffer les liquides puis à les maintenir suffisamment chauds en évitant les pics de température.

Un autre objet de la présente invention vise à proposer un appareil électrique de type cafetière à piston dans lequel la boisson puisse être préparée sans dégrader les arômes du café.

Un autre objet de la présente invention vise à proposer un appareil électrique de type cafetière à piston dans lequel la boisson puisse être préparée et conservée au chaud sans dégrader les arômes du café.

Les objets assignés à l'invention sont atteints avec un fond chauffant pour appareil électroménager destiné à chauffer des liquides selon les caractéristiques de la revendication 1. Un tel dispositif permet d'obtenir la coupure des moyens de chauffe avant l'ébullition du liquide. Il est ainsi possible de choisir des températures maximales de chauffe différentes de celles du point d'ébullition. De plus une grande puissance de chauffe peut être répartie sur la surface du fond du récipient. En outre la détection de température est ainsi améliorée lorsque de faibles quantités de liquides sont mises en chauffe.

Selon un mode de réalisation la piste résistive chauffante est déposée par sérigraphie. D'autres modes de réalisation sont envisageables pour la piste résistive chauffante tels que la découpe d'une feuille métallique.

Selon un mode de réalisation préféré l'élément bimétallique à déformation brusque est une coupelle bimétallique à retournement. Il est possible d'obtenir avec de tels éléments sensibles à la chaleur des températures de changement de position relativement précises, associés à un effort moteur permettant d'actionner un interrupteur ou une bascule. De plus ces éléments présentent un différentiel de réenclenchement important entre la montée en température et la descente en température.

Avantageusement des moyens de chauffe additionnels de maintien au chaud sont disposés sous ladite plaque, lesdits moyens de maintien au chaud comprenant une piste résistive de maintien au chaud alimentée électriquement de manière continue après coupure de l'alimentation des moyens de chauffe par les moyens de détection d'une température prédéterminée. Ainsi les moyens de maintien au chaud, prévus pour limiter la décroissance de la température de la boisson et non pour poursuivre la chauffe de la boisson, sont alimentés après la coupure des moyens de chauffe sans pics de température dus à une régulation. Grâce à cette disposition, les surchauffes même temporaires de la boisson sont évitées. L'utilisateur peut disposer de davantage de temps pour consommer sa boisson à la bonne température. Cette disposition permet de limiter la température de l'élément chauffant et ainsi d'éviter la poursuite de la chauffe de la boisson susceptible d'altérer les arômes de la boisson.

Avantageusement les moyens de maintien au chaud sont alimentés dès que les moyens de chauffe sont alimentés. Cette disposition permet d'obtenir une température stabilisée des moyens de maintien au chaud lors de la coupure des moyens de chauffe.

Selon un mode de réalisation la piste résistive de maintien au chaud est déposée par sérigraphie. D'autres modes de réalisation sont envisageables pour la piste résistive de maintien au chaud tels que la découpe d'une feuille métallique.

La piste résistive de maintien au chaud peut présenter un coefficient de température positif. Cette disposition permet de limiter la température des moyens de maintien au chaud et ainsi d'éviter la poursuite de la chauffe de la boisson susceptible d'altérer les arômes de la boisson.

Avantageusement les moyens de maintien au chaud présentent une ou plusieurs sections de piste adjacentes à la zone de contact de l'élément bimétallique à déformation brusque. Le maintien en température de l'élément bimétallique à déformation brusque au dessus de sa température inférieure de changement de position est ainsi facilité.

Selon une réalisation préférée, les moyens de détection d'une température prédéterminée prévus pour couper l'alimentation des moyens de chauffe sont prévus pour un réenclenchement automatique dès que la température inférieure de changement de position de l'élément bimétallique à déformation brusque est atteinte lors du refroidissement et les moyens de maintien au chaud présentent une puissance suffisante pour maintenir la température de l'élément bimétallique à déformation brusque supérieure à sa température de changement de position au refroidissement. Cette disposition permet d'éviter la remise en route des moyens de chauffe tant que l'utilisateur souhaite maintenir au chaud la boisson préparée.

De préférence les moyens de détection d'une température prédéterminée prévus pour couper l'alimentation des moyens de chauffe présentent un différentiel de réenclenchement supérieur à 20°C. En d'autres termes le différentiel ente les températures inférieure et supérieure de changement de position de l'élément bimétallique à déformation brusque est d'au moins 20 degrés.

En alternative, les moyens de détection d'une température prédéterminée prévus pour couper l'alimentation des moyens de chauffe sont associés à une bascule bistable. Ainsi après la coupure des moyens de chauffe, les moyens de chauffe ne peuvent être alimentés à nouveau sans intervention de l'utilisateur, et seuls les moyens de maintien au chaud sont en fonctionnement. De préférence la bascule est susceptible d'être actionnée par un bouton de mise en marche.

Avantageusement des moyens de sécurité thermique ultimes sont prévus pour couper l'alimentation des moyens de chauffe et des moyens de maintien au chaud notamment lors d'une chauffe à sec. De préférence les moyens de sécurité thermique ultimes sont disposés sous les influences thermiques de la piste de chauffe et de la piste de maintien au chaud. Cette disposition permet d'éviter les échauffements de la piste de maintien au chaud si tout le liquide contenu dans le récipient s'évapore. Les moyens de sécurité thermique ultimes peuvent notamment être formés par une coupelle bimétallique à retournement.

Les objets assignés à l'invention sont également atteints avec un appareil électroménager destiné à chauffer des liquides comportant un récipient avec un fond chauffant du type précité. Le rayonnement limité des moyens de chauffe permet de réduire l'encombrement de la base de l'appareil comportant les moyens de chauffe et de régulation.

Selon un mode de réalisation le récipient est cylindrique et un piston est monté coulissant dans le récipient, le piston étant perméable aux liquides et assurant une étanchéité pour les particules solides avec les parois latérales du récipient, le piston étant monté sur une tige et associé à un organe de manoeuvre émergeant d'un couvercle. Cette disposition permet de réaliser une cafetière électrique à piston, dans laquelle peuvent être préparés du café ou des boissons à filtrer.

L'invention sera mieux comprise à l'étude d'exemples de réalisation pris à titre nullement limitatifs et illustrés dans les figures annexées dans lesquelles :
- la figure 1 est une vue latérale en coupe d'un exemple de réalisation d'un appareil comportant un fond chauffant selon l'invention,
- la figure 2 est une vue schématique en coupe du fond chauffant de l'appareil montré à la figure 1,
- la figure 3 montre un détail de la figure 2,
- la figure 4 est une vue de dessous du fond chauffant de l'appareil montré aux figures 1 à 3, les moyens de détection de la température prédéterminée ayant été enlevés,
- la figure 5 est une vue schématique du câblage électrique de l'appareil montré aux figures 1 à 4,
- la figure 6 est une vue schématique du câblage électrique d'un autre exemple de réalisation d'un appareil comportant un fond chauffant selon l'invention.

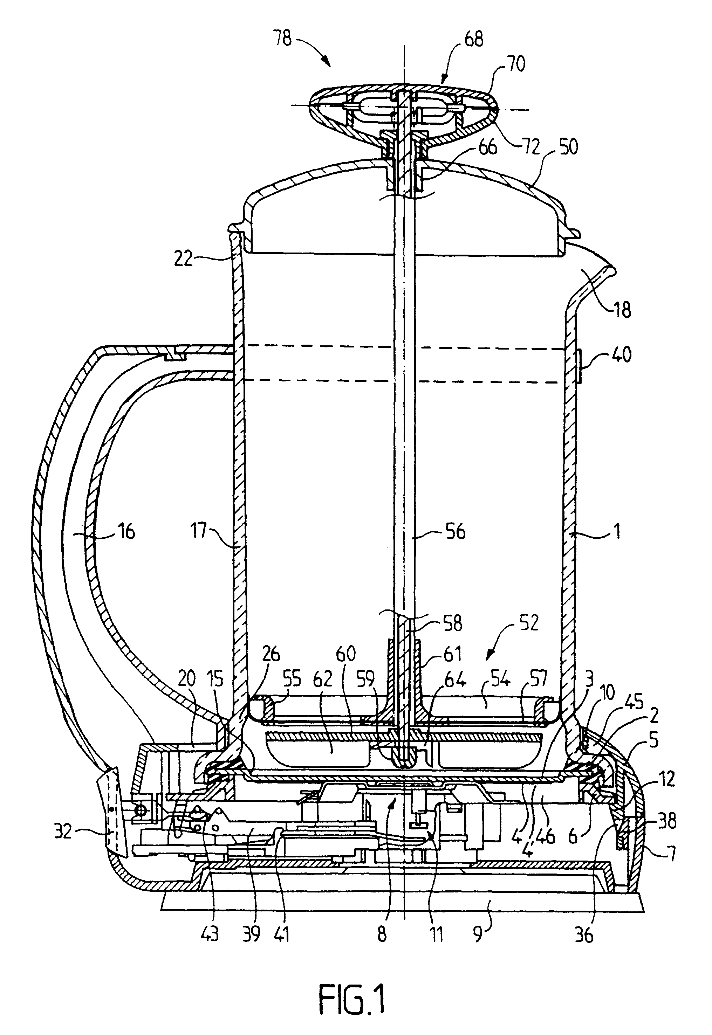

La figure 1 montre les éléments d'un appareil électroménager destiné à chauffer les liquides tel qu'une cafetière à piston.

L'appareil comporte un récipient 1 cylindrique comportant des parois latérales 17 et un fond chauffant 3. Les parois latérales 17 sont formées par un tube réalisé en verre, présentant une partie supérieure 22 légèrement évasée avec un bec 18 ainsi qu'un épaulement 10 dans sa partie inférieure. L'épaulement 10 est sensiblement plat. Un deuxième épaulement 26 est ménagé au dessus de l'épaulement 10. Le fond 3 est formé par une plaque circulaire 13 en inox sur la périphérie duquel est rapporté un joint d'étanchéité 2 en silicone. La face supérieure de la plaque 13 présente un léger embouti 15. Une poignée 16 est assemblée avec le récipient 1 grâce à un cerclage métallique 40.

Des moyens de chauffe 4 sont disposés sous le fond 3. Les moyens de chauffe 4 sont associés à un dispositif de contrôle de la température 8 comprenant des moyens de détection d'une température prédéterminée, associés à un bouton de mise en marche 32.

Des moyens de chauffe additionnels 4' de maintien au chaud, alimentés électriquement indépendamment des moyens de détection d'une température prédéterminée, sont disposés sous la plaque 13.

Une entretoise 6 comporte un passage 46 prévu pour l'introduction du dispositif de régulation 8. Un capot 5 annulaire comporte des nervures 45 prenant appui sur l'épaulement 10 et présente une encoche 20 prévue pour le passage du bec 18. Le capot 5 présente également des pattes de clipsage 12 prévues pour retenir l'entretoise 6. Un boîtier 7 est prévu pour fermer la partie inférieure du capot 5. Le boîtier 7 comporte des crochets de clipsage 38 prévus pour s'engager par l'extérieur dans une découpe 36 des pattes de clipsage 12 issues du capot 5. Les moyens de chauffe 4 sont alimentés par un socle de connexion électrique 9 amovible.

Un piston 52 est monté coulissant dans le récipient 1. Le piston 52 comporte une partie filtrante 54 formée par un tamis 57 prévu pour retenir les particules fines telles que la mouture de café en suspension dans l'eau. Le tamis 57 est renforcé en sa bordure extérieure par un anneau 55, et est en sa périphérie intérieure relié à un moyeu 61. Les bords périphériques du tamis 57 sont relevés vers le haut pour assurer une étanchéité avec les parois latérales 17 pour les particules de mouture de café en dispersion dans l'eau. Le piston 52 est monté sur une tige 58 coulissant dans un couvercle 50. Le piston 52 est associé à un organe de manoeuvre 68 émergeant du couvercle 50.

Des moyens d'agitation 60 sont montés sur la tige 58 en dessous du piston 52. La tige 58 est montée libre en rotation par rapport au piston 52. La tige 58 est associée à des moyens de commande 78 des moyens d'agitation 60, montés au dessus du couvercle 50. Le couvercle 50 comporte une cheminée axiale 66 prévue pour le passage d'un tube 56. L'organe de manoeuvre 68 est fixé au tube 56 au dessus du couvercle 50. Pour faciliter le montage, l'organe de manoeuvre 68 comporte une pièce inférieure 70 assemblée avec une pièce supérieure 72. Les moyens d'agitation 60 comportent des ailettes 62 radiales et verticales montées de manière amovible sur la tige 58. Un embout 59 est monté sur l'extrémité inférieure de la tige 58. Une épingle 64 immobilise les ailettes 62. Le retrait de l'embout 59 et de l'épingle 64 permet de retirer les ailettes 62 de la tige 58 pour accéder à la partie filtrante 54 pour le nettoyage. La tige 58 est disposée dans le tube 56 et est mobile en rotation dans ledit tube. Le moyeu 61 est fixé au tube 56.

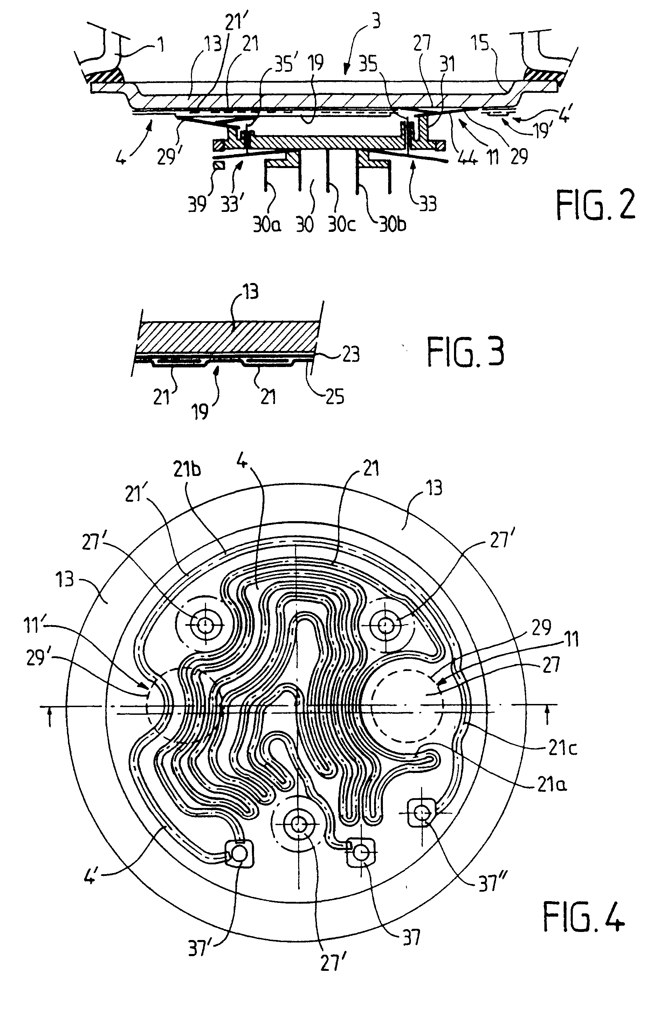

Les moyens de chauffe 4 et les moyens de maintien au chaud 4' sont disposés sous la plaque 13 formant le fond 3 du récipient 1. Tel que montré aux figures 2 et 3, les moyens de chauffe 4 et les moyens de maintien au chaud 4' sont formés par un élément chauffant plat 19, 19' disposé sur la face inférieure de la plaque 13. Chaque élément chauffant plat 19, 19' comporte une piste chauffante 21, 21' en matériau résistif, disposée entre une première couche électriquement isolante 23 et une deuxième couche électriquement isolante 25. La première couche isolante 23 est fixée sur la face inférieure de la plaque 13, par adhérence. La deuxième couche isolante 25 recouvre les pistes 21, 21' ou directement la première couche 23. Une zone d'épargne 27, dépourvue de pistes 21, 21', tel que bien visible à la figure 4, et dans laquelle les couches isolantes 23, 25 sont absentes, laisse apparaître la plaque 13. A titre de variante une ou plusieurs couches isolantes peuvent être prévues dans la zone 27, par exemple la couche 23. L'élément chauffant 19 présente par exemple une puissance de 1200 W. L'élément chauffant de maintien au chaud 19' présente une puissance limitée pour éviter l'ébullition de la boisson contenue dans le récipient 1, par exemple une puissance de 50 W.

Selon un mode de réalisation, les pistes 21, 21' sont obtenues par dépôt sérigraphique. Selon un autre mode de réalisation, les pistes 21, 21' sont obtenues par découpe d'une feuille métallique. D'autres modes de réalisation sont envisageables. La piste de maintien au chaud 21' peut présenter un coefficient de température positif, de manière à auto-limiter sa température. L'élément chauffant de maintien au chaud 19' peut également être formé par une résistance à coefficient de température positif (PTC).

Les moyens de détection d'une température prédéterminée prévus pour la coupure de l'alimentation électrique des moyens de chauffe sont formés par des moyens de coupure 11 en contact thermique direct avec la plaque 13 dans la zone d'épargne 27. Les moyens de coupure 11 comportent un élément bimétallique à déformation brusque 44, susceptible d'occuper une position basse température et une position haute température. L'élément 44 est monté en vis à vis de la zone d'épargne 27 sur un support 31. L'élément 44 en position basse température vient en contact avec la plaque 13. La zone d'épargne 27 présente des dimensions légèrement supérieures à la périphérie de l'élément bimétallique à déformation brusque 44.

Tel que montré aux figures 2 et 4, l'élément 44 est formé par une coupelle bimétallique circulaire à retournement 29. La coupelle 29 comporte une patte centrale fixée au support 31. La périphérie de la coupelle 29 vient en contact avec la plaque 13 lorsque la coupelle occupe sa position basse température. A titre de variante d'autres géométries sont envisageables pour l'élément 44.

La coupelle 29 présente par exemple au chauffage une température de retournement comprise entre 85 et 95°C, de manière à obtenir une eau suffisamment chaude pour la préparation du café sans pour autant atteindre l'ébullition. La coupelle 29 coopère avec un interrupteur 33 par l'intermédiaire d'une tige 35 montée coulissante dans le support 31. L'interrupteur 33 est fermé lorsque la coupelle 29 est en position basse température et est ouvert lorsque la coupelle 29 est en position haute température. Le retournement de la coupelle d'une position vers une autre entraîne l'ouverture ou la fermeture de l'interrupteur 33. La coupelle 29 permettant la détection d'une température prédéterminée présente un différentiel supérieur à 20°C entre la température supérieure de retournement, au chauffage, et la température inférieure de retournement, au refroidissement. La température de retournement de la coupelle 29 au refroidissement est par exemple comprise entre 60 et 70°C. La puissance de l'élément chauffant 19' formant les moyens de maintien au chaud 4' est choisie suffisante pour maintenir la température de la coupelle 29 supérieure à la température inférieure de retournement de ladite coupelle.

Un connecteur électrique mâle 30 est monté sur le support 31. Le connecteur 30 est prévu pour coopérer avec un connecteur électrique femelle disposé dans le socle d'alimentation 9.

Des moyens de protection thermique ultimes 11' sont formés par une deuxième coupelle bimétallique 29', prévue pour détecter les chauffes à sec, coopérant avec un interrupteur 33' par l'intermédiaire d'une tige 35'. La coupelle de chauffe à sec 29' vient dans sa position basse température en contact avec la deuxième couche isolante 25. Au moins une section de piste 21 est présente sous la coupelle de chauffe à sec 29'. La coupelle de chauffe à sec 29' présente par exemple une température de retournement comprise entre 150 et 250°C.

La figure 4 montre la piste de chauffe 21 répartie sur le fond 3 de manière à procurer une chauffe sensiblement homogène sur toute la surface de la plaque 13. Trois zones d'épargne 27' sont ménagées pour recevoir des tiges de fixation (non montrées à la figure 3) destinées à être fixées au support 31. Deux plots de connexion 37, 37' sont prévus pour l'alimentation de la piste 21. La zone d'épargne 27 est circulaire et la piste 21 présente une zone 21 a entourant la zone d'épargne 27 sur au moins la moitié de sa circonférence.

La piste de maintien au chaud 21' est formée par une section périphérique 21 b à proximité du bord de la plaque 13. Une section 21 c de la section périphérique 21 b vient longer la zone d'épargne 27 de sorte que plus des trois quarts de la circonférence de la zone d'épargne 27 soient entourés par une section de piste. Deux plots de connexion 37', 37" sont prévus pour l'alimentation de ia piste 21', le plot 37' étant commun avec la piste 21.

Tel que montré à la figure 4, la deuxième coupelle 29' de chauffe à sec est disposée au dessus d'une section de la piste 21 de chauffe et d'une section de la piste 21' de maintien au chaud.

Tel que bien visible à la figure 4 la coupelle 29 disposée dans la zone 27 est entourée à faible distance par les sections 21 a et 21 c des pistes de chauffe 21 et de maintien au chaud 21', cette disposition permettant d'améliorer la détection thermique notamment lors de la chauffe de faibles quantités de liquide.

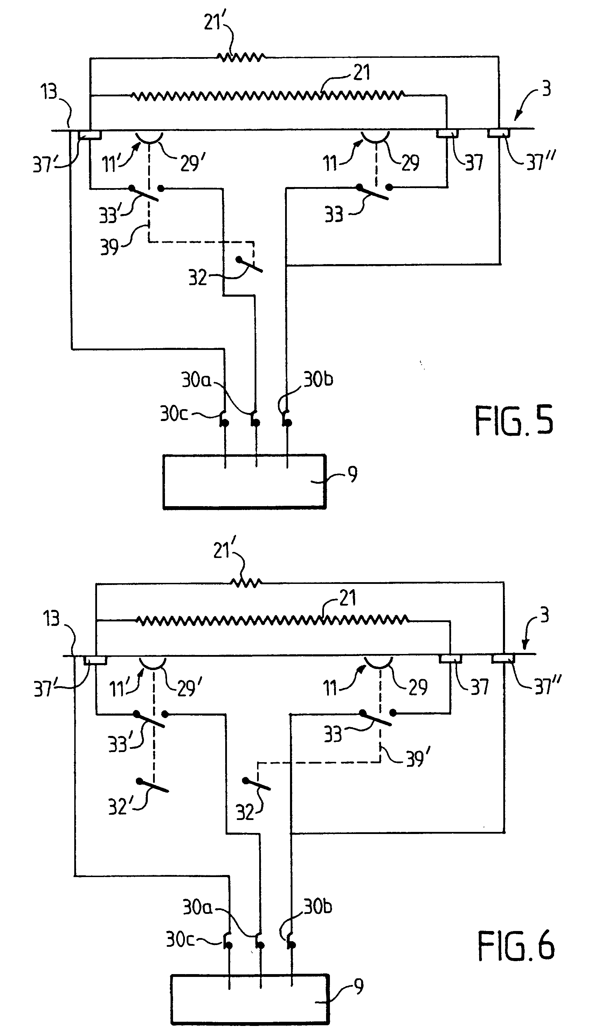

Tel que montré à la figure 5, l'interrupteur 33' est monté entre le plot commun 37' et une première borne 30a du connecteur 30. L'interrupteur 33 est monté entre le plot 37 et une deuxième borne 30b du connecteur 30. Le plot 37" de la piste de maintien au chaud 21' est monté sur la borne 30b. Le connecteur 30 comporte également une borne de terre 30c reliée électriquement à la plaque 13.

Le bouton de mise en marche 32 est associé à une bascule de commande 39 bistable occupant une première position correspondant à la position arrêt du bouton 32, telle que montré à la figure 1, dans laquelle l'interrupteur 33' est ouvert, et une deuxième position correspondant à la position marche du bouton 32, dans laquelle l'interrupteur 33' est fermé. La bascule 39 est montée pivotante autour d'un axe 41. La bascule 39 est associée à un ressort 43 monté de manière à obtenir un effort d'actionnement plus important lors de la mise en marche que lors de l'arrêt. Les moyens de sécurité thermique ultimes 11' formés par la coupelle 29' coopérant avec l'interrupteur 33', peuvent être réarmés par l'intermédiaire du bouton de commande 32 et de la bascule 39. Le bouton de commande 32 permet de fermer l'interrupteur 33' lorsque l'utilisateur souhaite mettre en chauffe l'appareil.

L'appareil présenté aux figures 1 à 5 fonctionne et s'utilise de la manière suivante. L'utilisateur verse de l'eau dans le récipient 1, le dispose sur le socle 9 et met en route les moyens de chauffe 4 à l'aide du bouton 32. La bascule 39 vient fermer l'interrupteur 33', lequel amène la tige 35' en contact avec la coupelle 29' ou à proximité de celle ci. L'interrupteur 33 associé à la coupelle 29 reste fermé tant que la coupelle 29 occupe sa position basse température. L'utilisateur peut si désiré fermer le récipient 1 à l'aide du couvercle 50, le piston 52 étant de préférence en position relevée. Avant que l'eau n'ait atteint son point d'ébullition, la coupelle 29 en contact direct avec la plaque 13 se retourne et propulse la tige 35 vers le bas, ce qui ouvre l'interrupteur 33. Les moyens de chauffe 4 ne sont plus alimentés. L'utilisateur peut préparer sa boisson, par exemple en introduisant de la mouture dans le récipient 1, en mélangeant la mouture avec les moyens d'agitation 60 après avoir remis en place le couvercle 50, et en amenant le piston 52 en position basse dans le récipient 1 pour filtrer la boisson. Les moyens de maintien au chaud 4' étant toujours sous tension, les déperditions thermiques dans le récipient sont limitées. La coupelle 29 reste en position haute température et l'interrupteur 33 reste ouvert. La boisson peut être conservée à une température suffisante pour une consommation non immédiate, sans refroidissement ni surchauffe. Cette disposition évite la formation de bulles de vapeur susceptibles de propulser le piston 52 vers le haut et de redisperser la mouture dans la boisson, la rendant ainsi non consommable. L'utilisateur peut couper l'alimentation des moyens de maintien au chaud 4' à l'aide du bouton 32. La température décroît dans le récipient 1 et l'interrupteur 33 se ferme. L'appareil est prêt pour une nouvelle utilisation.

En cas de chauffe à sec, la coupelle 29' repousse la tige 35' qui ouvre l'interrupteur 33' et repousse la bascule 39, laquelle dépasse son point d'équilibre instable et revient dans la position d'arrêt. Les moyens de chauffe 4 et les moyens de maintien au chaud 4' ne sont plus alimentés.

La figure 6 montre un autre exemple de réalisation différant de l'exemple précédent en ce qu'une bascule bistable 39' est associée au bouton de mise en marche 32 et coopère avec l'interrupteur 33. Les moyens de sécurité thermique ultimes 11' formés par la coupelle 29' associée à l'interrupteur 33' coopèrent avec un organe de réarmement 32', lequel peut comporter un bouton de réarmement accessible par l'utilisateur. La bascule bistable 39 associée à la coupelle 29', montrée aux figures 2 et 5, a été supprimée.

Le fonctionnement de ce mode de réalisation diffère du mode de réalisation précédent en ce que la coupelle 29 prenant sa position haute température amène la bascule 39' et le bouton 32 en position arrêt. Les moyens de maintien au chaud 4' restent activés tant que l'appareil reste connecté au socle 9. En cas de surchauffe de l'appareil, la coupelle 29' provoque l'ouverture de l'interrupteur 33'.

L'invention n'est pas limitée aux exemples de réalisation décrits et peut comporter de nombreuses modifications dans le cadre des revendications. Notamment les moyens de sécurité thermique ultimes 11' peuvent être formés par un fusible thermique. L'interrupteur 33 peut être remplacé par un commutateur assurant l'alimentation de la piste 21 formant les moyens de chauffe 4 lorsque l'élément bimétallique à déformation brusque 44 est en position basse température, et assurant l'alimentation de la piste 21' formant les moyens de maintien au chaud 4' lorsque l'élément bimétallique à déformation brusque 44 est en position haute température. L'élément bimétallique à déformation brusque 44 peut présenter d'autres géométries que celle circulaire de la coupelle 29, par exemple une géométrie rectangulaire. La géométrie de la zone 27 est alors adaptée à celle de l'élément 44. Les moyens de sécurité thermique ultime 11' peuvent également être formés par un élément bimétallique à déformation brusque d'une géométrie autre que celle circulaire de la coupelle 29'. La plaque 13 peut présenter un bord périphérique relevé pour former tout ou partie du récipient 1. La plaque 13 peut ne former qu'une partie du fond du récipient 1.

L'invention trouve son application dans les appareils électroménagers destinés à chauffer les liquides jusqu'à une température prédéterminée, et notamment dans les appareils dans lesquels on souhaite arrêter la chauffe avant l'ébullition du liquide contenu dans le récipient de l'appareil.

L'invention trouve en particulier son application dans les appareils électroménagers destinés à chauffer les liquides jusqu'à une température prédéterminée, dans lesquels le liquide doit être ensuite maintenu en température.

De tels appareils peuvent notamment consister en une cafetière à piston, un appareil pour obtenir de l'eau frémissante mais non bouillante, voire un appareil pour chauffer le lait, ou encore un appareil à fondue, une telle préparation étant essentiellement liquide. Ainsi la présente invention n'est pas limitée aux appareils prévus pour préparer des boissons.

## Revendications

1. Fond chauffant pour appareil électroménager destiné à chauffer des liquides, comportant une plaque (13) en inox supportant des moyens de chauffe (4), la plaque (13) étant recouverte sur sa face inférieure d'au moins une couche isolante (23) sur laquelle est agencée une piste résistive (21) chauffante, et des moyens de détection d'une température prédéterminée (11) inférieure à la température d'ébullition du liquide devant être chauffé, prévus pour couper l'alimentation de la piste résistive (21), les moyens de détection d'une température prédéterminée (11) comprenant un élément bimétallique à déformation brusque (44), susceptible d'occuper une position basse température et une position haute température, **caractérisé en ce que** ledit élément (44) est entouré par une ou plusieurs sections (21a) de piste résistive (21) sur au moins la moitié de sa circonférence, et de préférence sur au moins les trois quarts de sa circonférence, ledit élément (44) dans sa position basse température étant susceptible de venir en contact avec la plaque (13) dans une zone (27) dépourvue de piste résistive (21), la zone (27) présentant des dimensions légèrement supérieures à la périphérie de l'élément (44), la plaque (13) étant recouverte ou non par ladite au moins une couche isolante (23) dans la zone (27).

2. Fond chauffant selon la revendication 1, **caractérisé en ce que** la piste résistive (21) est déposée par sérigraphie.

3. Fond chauffant selon l'une des revendications 1 ou 2, **caractérisé en ce que** l'élément bimétallique à déformation brusque (44) est une coupelle bimétallique à retournement (29).

4. Fond chauffant selon l'une des revendications 1 à 3, **caractérisé en ce que** des moyens de chauffe additionnels de maintien au chaud (4') sont disposés sous la plaque (13), lesdits moyens de maintien au chaud (4') comprenant une piste résistive de maintien au chaud (21') alimentée électriquement de manière continue après coupure de l'alimentation des moyens de chauffe par les moyens de détection d'une température prédéterminée (11).

5. Fond chauffant selon la revendication 4, **caractérisé en ce que** les moyens de maintien au chaud (4') sont alimentés dès que les moyens de chauffe (4) sont alimentés.

6. Fond chauffant selon l'une des revendications 4 ou 5, **caractérisé en ce que** la piste résistive de maintien au chaud (21') est déposée par sérigraphie.

7. Fond chauffant selon l'une des revendications 4 à 6, **caractérisé en ce que** la piste résistive de maintien au chaud (21') présente un coefficient de température positif.

8. Fond chauffant selon l'une des revendications 4 à 7, **caractérisé en ce que** les moyens de maintien au chaud (4') présentent une ou plusieurs sections de piste (21c) adjacentes à la zone (27) de contact de l'élément bimétallique à déformation brusque (44).

9. Fond chauffant selon l'une des revendications 4 à 8, **caractérisé en ce que** les moyens de détection d'une température prédéterminée (11) prévus pour couper l'alimentation des moyens de chauffe sont prévus pour un réenclenchement automatique dès que la température inférieure de changement de position de l'élément bimétallique à déformation brusque (44) est atteinte lors du refroidissement et **en ce que** les moyens de maintien au chaud (4') présentent une puissance suffisante pour maintenir la température de l'élément bimétallique à déformation brusque (44) supérieure à sa température de changement de position au refroidissement.

10. Fond chauffant selon l'une des revendications 1 à 9, **caractérisé en ce que** les moyens de détection d'une température prédéterminée (11) prévus pour couper l'alimentation des moyens de chauffe (4) présentent un différentiel de réenclenchement supérieur à 20°C.

11. Fond chauffant selon l'une des revendications 1 à 9, **caractérisé en ce que** les moyens de détection d'une température prédéterminée (11) prévus pour couper l'alimentation des moyens de chauffe (4) sont associés à une bascule bistable (39').

12. Fond chauffant selon la revendication 11, **caractérisé en ce que** la bascule (39') est susceptible d'être actionnée par un bouton (32) de mise en marche.

13. Fond chauffant selon l'une des revendications 4 à 11, **caractérisé en ce que** des moyens de sécurité thermique ultimes (11') sont prévus pour couper l'alimentation des moyens de chauffe (4) et des moyens de maintien au chaud (4') notamment lors d'une chauffe à sec.

14. Fond chauffant selon la revendication 12, **caractérisé en ce que** les moyens de sécurité thermique ultimes (11') sont disposés sous les influences thermiques de la piste de chauffe et de la piste de maintien au chaud.

15. Fond chauffant selon l'une des revendications 4 à 11, **caractérisé en ce que** les moyens de sécurité thermique ultimes (11') sont formés par une coupelle bimétallique à retournement (29').

16. Appareil électroménager destiné à chauffer des liquides, comprenant un récipient (1) comportant un fond chauffant selon l'une des revendications 1 à 15.

17. Appareil selon la revendication 16, **caractérisé en ce que** le récipient (1) est cylindrique, un piston (52) étant monté coulissant dans ledit récipient, ledit piston étant perméable aux liquides et assurant une étanchéité pour les particules solides avec les parois latérales (17) dudit récipient, ledit piston étant monté sur une tige (58) et associé à un organe de manoeuvre (68) émergeant d'un couvercle (50).

## Patentansprüche

1. Heizbarer Boden für Haushaltsgerät zum Erhitzen von Flüssigkeiten, mit einer Platte (13) aus nicht rostendem Stahl, die Heizmittel (4) trägt, wobei die Platte (13) auf ihrer Innenseite mit mindestens einer Isolierschicht (23) bedeckt ist, auf welcher eine heizende Widerstandsbahn (21) angeordnet ist, und Mitteln zum Erfassen einer vorbestimmten Temperatur (11), die niedriger als die Siedetemperatur der zu erhitzenden Flüssigkeit ist, welche zur Unterbrechung der Versorgung der Widerstandsbahn (21) vorgesehen sind, wobei die Mittel zum Erfassen einer vorbestimmten Temperatur (11) ein Bimetall-Element mit schlagartiger Verformung (44) aufweisen, das eine Stellung niedriger Temperatur und eine Stellung hoher Temperatur einnehmen kann, **dadurch gekennzeichnet, dass** das Element (44) mit einem oder mehreren Abschnitten (21a) der Widerstandsbahn (21) über mindestens die Hälfte und vorzugsweise über mindestens dreiviertel dessen Umfangs umgeben ist, wobei in seiner Stellung niedriger Temperatur das Element (44) mit der Platte (13) in einem Bereich (27) in Kontakt gelangen kann, die keine Widerstandsbahn (21) aufweist, wobei der Bereich (27) geringfügig größere Abmessungen als der Umfang des Elements (44) aufweist, wobei die Platte (13) in dem Bereich (27) mit der mindestens einer Isolierschicht (23) bedeckt ist oder nicht.

2. Heizbarer Boden nach Anspruch 1, **dadurch gekennzeichnet, dass** die Widerstandsbahn (21) durch Siebdruck aufgebracht wird.

3. Heizbarer Boden nach einem der Ansprüche 1 oder 2, **dadurch gekennzeichnet, dass** das Bimetall-Element (44) mit schlagartiger Verformung eine umschnappbare Bimetallschale (29) ist.

4. Heizbarer Boden nach einem der Ansprüche 1 bis 3, **dadurch gekennzeichnet, dass** zusätzliche Warmhalteheizmittel (4') unter der Platte (13) angeordnet sind, wobei die Warmhaltemittel (4') eine Warmhaltewiderstandsbahn (21') aufweisen, die nach Unterbrechung der Versorgung der Heizmittel durch die Mittel zum Erfassen einer vorbestimmten Temperatur (11) elektrisch kontinuierlich versorgt ist.

5. Heizbarer Boden nach Anspruch 4, **dadurch gekennzeichnet, dass** die Warmhaltemittel (4') versorgt werden, sobald die Heizmittel (4) versorgt sind.

6. Heizbarer Boden nach einem der Ansprüche 4 oder 5, **dadurch gekennzeichnet, dass** die Warmhaltewiderstandsbahn (21') durch Siebdruck aufgebracht wird.

7. Heizbarer Boden nach einem der Ansprüche 4 bis 6, **dadurch gekennzeichnet, dass** die Warmhaltewiderstandsbahn (21') einen positiven Temperaturkoeffizient aufweist.

8. Heizbarer Boden nach einem der Ansprüche 4 bis 7, **dadurch gekennzeichnet, dass** die Warmhaltemittel (4') einen oder mehrere Bahnabschnitte (21c) aufweisen, die dem Bereich (27) angrenzend sind, der mit dem Bimetallelement mit schlagartiger Verformung (44) in Kontakt ist.

9. Heizbarer Boden nach einem der Ansprüche 4 bis 8, **dadurch gekennzeichnet, dass** die Mittel zum Erfassen einer vorbestimmten Temperatur (11), die zur Unterbrechung der Versorgung der Heizmittel vorgesehen sind, für eine automatische Wiedereinschaltung vorgesehen sind, sobald die untere Temperatur zum Wechsel der Stellung des Bimetallelements mit schlagartiger Verformung (44) beim Abkühlen erreicht sind, und dass die Warmhaltemittel (4') eine Leistung aufweisen, die genügt, um die Temperatur des Bimetallelements mit schlagartiger Verformung (44) höher zu halten als dessen Temperatur zum Wechsel der Stellung beim Abkühlen.

10. Heizbarer Boden nach einem der Ansprüche 1 bis 9, **dadurch gekennzeichnet, dass** die Mittel zum Erfassen einer vorbestimmten Temperatur (11), die zur Unterbrechung der Versorgung der Heizmittel (4) vorgesehen sind, eine Wiedereinschaltungsdifferenz aufweisen, die über 20°C liegt.

11. Heizbarer Boden nach einem der Ansprüche 1 bis 9, **dadurch gekennzeichnet, dass** die Mittel zum Erfassen einer vorbestimmten Temperatur (11), die zur Unterbrechung der Versorgung der Heizmittel (4) vorgesehen sind, einem Flip-Flop (39') zugeordnet sind.

12. Heizbarer Boden nach Anspruch 11, **dadurch gekennzeichnet, dass** der Flip-Flop (39') durch einen Einschaltknopf (32) betätigbar ist.

13. Heizbarer Boden nach einem der Ansprüche 4 bis 11, **dadurch gekennzeichnet, dass** Notfall-Wärmesicherheitsmittel (11') zur Unterbrechung der Versorgung der Heizmittel (4) und der Warmhaltemittel (4') insbesondere bei einem Trockenlauf vorgesehen sind.

14. Heizbarer Boden nach Anspruch 12, **dadurch gekennzeichnet, dass** die Notfall-Wärmesicherheitsmittel (11') unter den thermischen Einflüssen der Heizbahn und der Warmhaltewiderstandsbahn angeordnet sind.

15. Heizbarer Boden nach einem der Ansprüche 4 bis 11, **dadurch gekennzeichnet, dass** die Notfall-Wärmesicherheitsmittel (11') durch eine umschnappbare Bimetallschale (29) gebildet sind.

16. Haushaltsgerät zum Erhitzen von Flüssigkeiten, mit einem Behälter (1) mit einem heizbaren Boden nach einem der Ansprüche 1 bis 15.

17. Gerät nach Anspruch 16, **dadurch gekennzeichnet, dass** der Behälter (1) zylinderförmig ist, wobei ein Kolben (52) im Behälter gleitend angebracht ist, wobei der Kolben Flüssigkeiten durchlässt und für die festen Partikeln eine Abdichtung mit den Seitenwänden (17) des Behälters gewährleistet, wobei der Kolben an einem Schaft (58) angebracht und einem Betätigungsorgan (68) zugeordnet ist, der aus einem Deckel (50) austritt.

## Claims

1. A heater base for a household electrical appliance for heating liquids, the base comprising a stainless steel plate (13) supporting heater means (4), the plate (13) being covered on its bottom face in at least one insulating layer (23) having a heater resistive track (21) arranged thereon, and detector means (11) for detecting a predetermined temperature that is lower than the boiling point of the liquid to be heated, said means being designed to switch off the power supply to the resistive track (21), the means (11) for detecting a predetermined temperature comprising a snap action bimetallic element(44) suitable for occupying a low temperature position and a high temperature position, the heater base being **characterized in that** said element (44) is surrounded by one or more sections (21a) of resistive track (21) over at least half of its circumference, and preferably over at least three quarters of its circumference, said element (44) in its low temperature position being suitable for coming into contact with the plate (13) in a zone (27) that has no resistive track (21), the zone (27) having dimensions that are slightly greater at the periphery of the element (44), the plate (13) being covered or not covered by said at least one insulating layer (23) in the zone (27).

2. A heater base according to claim 1, **characterized in that** the resistive track (21) is applied by a screen printing process.

3. A heater base according to claim 1 or 2, **characterized in that** the snap action bimetallic element (44) is a reversible bimetallic cup (29).

4. A heater base according to any one of claims 1 to 3, **characterized in that** additional heater means (4') for keeping hot are disposed under the plate (13), said means (4') for keeping hot comprising a resistive track (21') for keeping hot that is continuously powered electrically after the power supply for the heater means has been switched off by the means (11) for detecting a predetermined temperature.

5. A heater base according to claim 4, **characterized in that** the means (4') for keeping hot are powered as soon as the heater means (4) are powered.

6. A heater base according to claim 4 or 5, **characterized in that** the resistive track (21') for keeping hot is applied by a screen printing process.

7. A heater base according to any one of claims 4 to 6, **characterized in that** the resistive track (21') for keeping hot has a positive temperature coefficient.

8. A heater base according to any one of claims 4 to 7, **characterized in that** the means (4') for keeping hot have one or more track sections (21c) next to the zone (27) of contact with the snap action bimetallic element (44).

9. A heater base according to any one of claims 4 to 8, **characterized in that** the means (11) for detecting a predetermined temperature designed to switch off the power supply to the heater means are also designed to switch back on automatically as soon as the snap action bimetallic element (44)reaches its low temperature change-of-position on cooling, and **in that** the means (4') for keeping hot have sufficient power to keep the temperature of the snap action bimetallic element (44) above its cooling change-of-position temperature.

10. A heater base according to any one of claims 1 to 9, **characterized in that** the means for detecting a predetermined temperature (11) designed to switch off the power supply to the heater means (4) have a switch back on temperature differential of more than 20°C.

11. A heater base according to any one of claims 1 to 9, **characterized in that** means for detecting a predetermined temperature (11) designed to switch off the power supply to the heater means (4) are associated with a bistable circuit (39').

12. A heater base according to claim 11, **characterized in that** the bistable circuit (39') can be actuated by an ON switch (32).

13. A heater base according to any one of claims 4 to 11, **characterized in that** ultimate thermal safety means (11') are provided to switch off the power supply to the heater means (4) and to the means (4') for keeping hot, particularly when heating while dry.

14. A heater base according to claim 12, **characterized in that** the ultimate thermal safety means (11') are disposed so as to be influenced by the temperature of the heating track and of the track for keeping hot.

15. A heater base according to any one of claims 4 to 11, **characterized in that** the ultimate thermal safety means (11') are formed by a reversible bimetallic cup (29).

16. A household electrical appliance for heating liquids, comprising a receptacle (1) including a heater base according to any one of claims 1 to 15.

17. An appliance according to claim 16, **characterized in that** the receptacle (1) is cylindrical, a piston (52) being slidably mounted in said receptacle, said piston being permeable to liquids and providing leaktightness against solid particles relative to the side walls (17) of said receptacle, said piston being mounted on a shaft (58) and connected to a drive member (68) which projects from a lid (50).
